**Europäisches Patentamt**

**European Patent Office**

**Office européen des brevets**

(19)

(11) Publication number: **0 019 675**
**B1**

(12) **EUROPEAN PATENT SPECIFICATION**

(45) Date of publication of patent specification: **23.02.83**

(51) Int. Cl.³: **A 23 L 2/38, A 23 L 1/30**

(21) Application number: **79301044.8**

(22) Date of filing: **01.06.79**

(54) **Dry compositions for making savoury beverages.**

(43) Date of publication of application:
**10.12.80 Bulletin 80/25**

(45) Publication of the grant of the patent:
**23.02.83 Bulletin 83/8**

(84) Designated Contracting States:
**BE CH DE FR IT LU NL SE**

(56) References cited:
**DE - A - 2 117 772**
**DE - A - 2 202 267**
**DE - A - 2 434 112**
**US - A - 3 914 457**

(73) Proprietor: **Howard, Alan Norman**
**39 Gilmerton Court Long Road**
**Trumpington Cambridge CB2 2HQ (GB)**

(72) Inventor: **Howard, Alan Norman**
**39 Gilmerton Court Long Road**
**Trumpington Cambridge CB2 2HQ (GB)**

(74) Representative: **Sanderson, Laurence Andrew et al,**
**Sanderson & Co. 97 High Street**
**Colchester Essex CO1 1TH (GB)**

Courier Press, Leamington Spa, England.

## Dry compositions for making savoury beverages

This invention relates to dry compositions for making savoury beverages; in particular it concerns dry compositions in powder or tablet form, for dissolution in aqueous ingestible liquids to yield beverages with a savoury flavour, which comprise dry proteinaceous material optionally combined with non-proteinaceous adjuvants. The compositions find especial use in low calorie diets.

In the treatment of obesity, the main object of dietetic control is to persuade the patient to adhere to a low-calorie diet. That however is often difficult, since these are often very monotonous and quickly eaten. To assist the patient to adhere to the regime, a large number of low-calorie drinks have been devised and put on the market. These already-known low-calorie drinks consists of citrus, quinine and cola flavours, sweetened with saccharin, and often they are carbonated. Excellent as these are in their way, they tend always to be sweet rather than savoury, and adult patients quickly begin to yearn for savoury drinks rather than sweet ones. Although there are a number of products on the market which can provide savoury drinks, such as the meat extracts and yeast extracts sold in Britain under the trade names Oxo, Marmite and similar products, these unfortunately are usually unsuitable for use by obese patients undergoing a dietary regime, since they are high in calories and also have a high salt content. Moreover, though excellent in themselves, the flavours in the available commercial products of this kind are fairly limited.

There are nowadays available a large number of both synthetic and natural savoury flavourings, which are used by foodstuff processors to flavour normal foodstuffs, especially soups. The use of such synthetic and natural savoury flavourings in normal foodstuffs is well-established under factory conditions, since there the manner and amount of the addition of such savoury flavourings can be carefully controlled. It will be appreciated that with powerful savoury flavourings of this kind it is necessary that they should be used in just the right amounts, neither too great nor too small, and that they should be evenly distributed throughout the foodstuff so that there are no localised variations in the concentration of the flavour.

While it seems natural to contemplate the possibility that such synthetic and natural savoury flavourings might form the basis for savoury beverages, and in particular low-calorie savoury beverages suitable for use by those on a dietary regime, this objective has in fact proved somewhat difficult to attain. To make a good savoury flavour several ingredients are necessary. The indispensable basis for any good savoury flavour is always a proteinaceous material, derived from natural protein and/or hydrolysed proteins, to which however there usually should also be added a variety of other materials including some or all of the following, namely natural and/or synthetic flavours, spices, herbs, salt and flavour enhances. It must also be recognised that people generally expect certain flavours to be associated with certain colours (thus for instance a tomato-flavoured beverage would almost universally be expected to be reddish in colour) and consequently it is for practical purposes also necessary that any composition based upon proteinaceous material and containing some or all of the other ingredients just mentioned, which is intended for making up a low-calorie savoury-flavoured beverage, will also contain colouring matter.

If the powerfully-flavoured proteinaceous natural or synthetic savoury flavourings now used in foodstuff processing are to be made available for use by the public at large, particularly by those on dietary regimes, so that they can prepare savoury beverages from them, it is for practical purposes necessary that not only the proteinaceous flavouring material but also the other desirable ingredients including colouring matter should be presented to the intending user in some form in which he is more or less forced to use all the necessary ingredients in the right proportions, and moreover in a form which ensures that they are rapidly and homogeneously distributed throughout the beverage which the user is to drink. This effectively demands that the composition should be presented, ready for dissolution in cold or hot water as the case may be, either as a premeasured tablet-like unit or perhaps as a powder which can be measured out by the spoonful.

That however has its problems—because it is notorious that most tablets do not readily dissolve even in hot water, far less in cold; and because even if a tablet or a powder is assisted to dissolve by crushing and/or stirring with a teaspoon, most people find it discouraging to have to prepare any kind of drink that way.

To overcome those problems it is therefore conventional, when certain kinds of pharmaceutical tablets need to be dissolved in water, to make the tablet an effervescent one. Moreover, there are certain effervescent tables on the market of a non-pharmaceutical kind, such as those to make up fizzy orange or like citrus-flavour drinks for children.

Furthermore, DE—A—2,117,772 discloses food in powdered form containing a fruit acid and at least one carbonate. The disclosed food contains a relatively small amount of nutrients, but has a high satiation value because of its effervescent nature and due to generation of carbon dioxide which is increased by stomach acid.

It has not however been previously proposed (so far as the Applicant is aware) to make effervescent tablets of any other kind of foodstuff supplement; nor indeed is this surprising, since effervescence is a phenomenon only occasionally acceptable in a savoury beverage, and few people (perhaps not even those upon a dietary regime) would accept fizzy beverages in the wide variety of savoury flavours which can now be made.

Indeed, investigation of the possibility of making fizzy savoury beverages had led to the conclusion that effervescent tablets, of the conventional kind already used for certain pharmaceutical products and some fizzy children's drinks, are not a suitable form of presentation for the savoury flavourings with which this invention is concerned. Apart from the reasons already indicated above, it must be borne in mind that proteinaceous material which is a necessary main component of any savoury flavouring will usually best yield up its flavour when dissolved in relatively hot water, yet conventional effervescent couples (as currently employed in pharmaceutical and fizzy-drink effervescent tablets) when added to hot water result in a very rapid and voluminous evolution of gas, which is liable to be dangerous as it splatters and splashes hot liquid around, and anyway is disagreeable to the user.

Thus neither of the conventional alternatives is acceptable. Ordinary non-effervescent tablets consisting merely of savoury proteinaceous flavouring materials with conventional adjuvants such as natural and synthetic flavours and/or spices and/or herbs and/or salt and/or flavour enhancers and/or colouring matter compressed together with normal tabletting lubricants and other aids prove disappointing in use, since when mixed even with hot water they dissolve only with great difficulty, and thus require far too much time to transform them into a well-mixed beverage. Conventional effervescent tablets, though they dissolve very rapidly, are equally unacceptable for different reasons mainly because they effervesce so violently in hot water that they cause dismay and perhaps danger to the user.

This invention seeks to overcome the above problems by the inclusion of sub-effervescent amounts of gas-formers in compressed tablets or powders containing proteinaceous savoury flavourings optionally combined with non-proteinaceous adjuvants such as flavouring components and flavour-enhancers. The inclusion of the gas-former greatly promotes the speed of disintegration and subsequent dispersion and dissolution of the tablets in hot or even cold water, and similarly promotes dispersion and dissolution of the powders, thus readily achieving without any objectionable or dangerous evolution of gases the homogeneous mixing which results in excellent savoury beverages. Such tablets and powders can moreover have a very low calorie content, and are then highly suitable for use in low-calorie dietary regimes.

Accordingly, this invention provides dry compositions in powder or tablet form, for dissolution in aqueous ingestible liquids to yield beverages with a savoury flavour, which comprise dry proteinaceous material optionally combined with non-proteinaceous adjuvants, characterized in that the composition contains dry proteinaceous material present in an amount of from 5% to 90% of the total weight of the composition and a gas-former present in an amount, proportionate to the other ingredient(s), which is sub-effervescent but sufficient to facilitate disintegration, dispersion and dissolution of the proteinaceous material in aqueous ingestible liquid to form the desired beverage.

The dry proteinaceous material is an essential component since it imparts the desired savoury character to the compositions of this invention, and it can be either desiccated natural protein and/or protein hydrolysates. The dry proteinaceous material can in fact be any dehydrated natural product containing protein and/or protein hydrolysate, such as desiccated proteinaceous material from beef, mutton, pork, turkey, duck, chicken, soya beans, peanuts, wheat gluten, plasma, fish, egg, milk or yeast, or it can be hydrolysates obtained from the above materials, which are especially preferred because of their very palatable flavours.

As indicated above, the composition must contain one or more gas-formers. The term "gas-former" is used herein to mean any compound or a mixture of compounds which on dissolution in water or aqueous liquids, at least at super-ambient temperatures, will evolve gas capable of disintegrating the tablet and dispersing the particles of composition in the liquid. The gas to be generated by the gas-former will usually be carbon dioxide, but its nature is not important (provided naturally that it is not noxious in the small amounts employed) and it can for instance be ammonia. Gas-formers of this kind are already known, such as the conventional so-called "effervescent couples" comprising a mixture of a carbonate and/or bicarbonate on the one hand with an acid on the other hand—which in aqueous solution react with each other to generate carbon dioxide *in situ*. If using this type of effervescent couple as the gas-former, it should be noted that the carbonate or bicarbonate employed can be any non-toxic ingestible carbonate or bicarbonate salt which will readily react with an acid to form carbon dioxide in water, such as for example ammonium, magnesium, calcium, zinc, bismuth, sodium and potassium carbonates and bicarbonates. Of these, the preferred one is sodium bicarbonate because of its ready availability and cheapness. Similarly, the acid used as part of the effervescent couple forming the gas-former can be any solid compound which yields hydrogen ions in water, and which is ingestible. If using chemicals as the acid sources, suitable ones are citric, malic, tartaric and glucoronic acids, as well as sodium bisulphate and potassium hydrogen tartrate. The acid however may also be from a non-chemical source, such as the malic acid present in large quantities in tomato powder, which can suffice in itself to react with the necessary small amount of sodium bicarbonate. Of these various acids for use in effervescent couples serving as gas-former it seems that in general citric and malic acids are to be preferred.

For the purposes of this invention however the gas-formers used need not be the conventional effervescent couples, but can be single chemical compounds capable of decomposition in water, at least at super-ambient temperatures, such as ammonium carbonate or bicarbonate, which will spontaneously break down on dissolution to evolve ammonia gas and carbon dioxide gas in sufficient amounts to disintegrate the tablet, yet which either do not escape from the liquid beverage or, if they do, manage somehow to avoid imparting an unpleasant ammoniacial odour to the beverage.

The gas-former is an essential component of the compositions of this invention, since the gas generated by the gas-former on dissolving the composition in water or some other aqueous liquid will, if the composition is in the form of a tablet, assist to disintegrate the otherwise hard and possibly somewhat sticky mass of proteinaceous material and perhaps other optional ingredients in such a tablet, and anyway—even if the composition is in the form of a powder—will also assist to disperse and thus aid in dissolving the particles of the composition to form the desired beverage quickly and homogeneously.

The amount of gas-former in the composition must however be kept within limits. There is no really critical lower limit, since tests have shown that even very small amounts of carbon dioxide or other gas generated in a tablet as it is attacked by water provide enough pressure to help split apart the compressed particles of the tablet and allow ready access of water molecules thereinto, in which the powdered particles are readily soluble and/or dispersible. Moreover the swirling action created in the liquid by the generation of tiny bubbles of gas in the vicinity of the tablet or powder assists to disperse the particles in the liquid and thus promotes their dissolution therein.

It is however critical that the proportionate amount of gas-former in the composition should be sub-effervescent. The term "sub-effervescent" is used herein to indicate that the composition, even when dissolved in hot water, should not be what is commonly understood by "fizzy"—but naturally this does not exclude the use of compositions which generate sufficient gas to evolve a few, fairly small bubbles, and thus serve to agitate the beverage to a slight extent—which indeed is within limits desirable, since it promotes thorough mixing. The proportionate amount of the gas-former must be sub-effervescent, so that while capable of distintegrating the table it does not give rise to objectionable gas evolution.

Given the qualitative indication that the composition must contain a sufficient but sub-effervescent amount of gas-former, it is believed that the formulator will have all the guidance that he needs to ascertain the effective upper and lower limits in any particular composition which he seeks to formulate. To place precise, quantitative upper and lower limits upon the proportionate amounts of gas-former to be used, which will be applicable in every case, is not really possible, since the excessive effervescence which is to be avoided depends not only on the amount of gas evolved by the gas-former but also on the rate at which it is evolved, and that in turn depends upon whether the composition is in tablet or in powder form, upon whether it is intended for use in cold or hot water, and (at least in the case of tablets) also upon the nature and amount of the other ingredients in the tablet and thus the readiness with which it will disintegrate under attack by water.

With a well-formulated composition however the formulator can guide himself by certain simple preliminary calculations, based upon the maximum volume of gas which can be generated by the gas-former, and which moreover can thereafter be confirmed by very simple preliminary trials. It seems that for most practical purposes each 100 grams of composition should contain an amount of gas-former in the range of from 66 milliequivalents to 833 milliequivalents of gas-former—by which is meant either that amount of a single compound such as ammonium carbonate or bicarbonate, or that amount of each of the components of an effervescent couple comprising for instance sodium bicarbonate and malic or citric acid.

If therefore the formulator feels that he must have precise, quantitative upper and lower limits for the proportionate amount of gas-former, when employing one of the preferred effervescent couples used in the compositions of this invention, i.e. a dry mixture of a carbonate and/or a bicarbonate with an acid, above all a dry mixture of sodium bicarbonate and malic and/or citric acid, one arrives at rough but fairly reliable practical lower and upper limits for the proportionate amount of gas-former, namely from 5% to 40% by weight of the whole composition.

Applying and confirming this practical rule, it has been found that, for instance a 6 gram tablet or powder composition, containing 20% by weight (of the whole composition) of sodium bicarbonate and sufficient acid to react therewith, when dissolved in hot water at 98°C will rapidly evolve a maximum of 320 ml (at NTP) of carbon dioxide, resulting in a beverage which is on the verge of being slightly "fizzy" and which thus is at the upper limit of acceptability. When however an otherwise similar tablet or powder composition is used, but which contains only 5% by weight of sodium bicarbonate, the maximum volume of carbon dioxide evolved is 80 ml (at NTP) which is barely noticeable and certainly non-fizzy.

The choice of an appropriate optimum amount of gas-former within those limits can again best be left to the competent formulator, to be selected by him in relation to the compound or compounds used as gas-formers, the other ingredients and the intended purposes of the composition, notably whether it is to be dissolved in cold or in hot water.

Again with reference to the preferred gas-formers currently contemplated for use in the

0 019 675

compositions of the present invention (which besides the bicarbonate/acid mix also include ammonium carbonate or bicarbonate) it can however be said for rough general guidance that the proportionate amount of gas-former present in the composition will usually be in the range of from 5% to 30%, and preferably in the range of from 5% to 15%, by weight of the whole composition.

An optional but very desirable feature of the dry savoury compositions of this invention is that they should, besides dry proteinaceous material, and a gas-former (i.e. as a non-proteinaceous adjuvant), also include an anti-caking agent. The anti-caking agent of choice is one which is or includes tricalcium phosphate, which moreover is also of value for dietetic reasons, and can therefore be present in quite large amounts. Even so, it will not normally be present in a proportionate amount relative to the whole composition of more than 75% by weight, and preferably its amount will be in the range of from 5% to 15% by weight of the whole composition. A suitable source of tricalcium phosphate is so-called "bone phosphate", an edible-grade naturally-derived product produced from chemically-unmodified animal bone, and which contains the calcium-phosphate-carbonate complex of the original bone, corresponding to about 80% of tricalcium phosphate. The inclusion of only 10% by weight of this ingredient has been shown by tests to reduce the hygroscopic uptake of atmospheric moisture by the compositions of this invention over a period of 5 hours from 1% to 0.45% by weight.

The compositions will also advantageously include a flavour-enhancer, which may for instance be one or more ribotides but usually and preferably will be or include mono-sodium glutamate. The proportionate amount in which mono-sodium glutamate should be present in the composition (if present) will however normally be not greater than 25% by weight of the whole composition.

The flavour-enhancer is valuable in the composition if only to bring out the full flavour of the proteinaceous material, which may in itself be sufficient to ensure that a palatable savoury beverage can be prepared from the composition. It is nevertheless usually preferred that the compositions of this invention should, besides dry proteinaceous material and gas-former (as well as perhaps other optional components), also include a flavouring component, which may serve to impart special, characteristic flavours to the beverages obtained from the composition. The proportionate amount of the flavouring component in the composition is to some extent dependent upon the nature of the ingredients making up the flavouring component, but will seldom be more than 75% by weight of the whole composition. While other types of ingredients are not necessarily excluded, the flavouring component will normally consist of one or more of the following type of ingredients, namely (a) concentrated meat and/or vegetable flavour(s) and/or (b) salt and/or (c) pepper and/or other spices.

As a general rule, pepper and/or other spices may be present in the dry savoury compositions of this invention in a proportionate amount not exceeding 10% by weight of the whole composition. Suitable spices besides pepper include mustard and/or herbs such as tumeric and/or cardimon.

Again generally speaking, the flavouring component should include either (a) concentrated natural meat and/or natural vegetable flavours or (b) synthetic savoury flavours, or (c) both natural and synthetic flavours. It is not really possible to say anything precise concerning the proportionate amount of such ingredients, except that they cannot exceed 75% by weight of the whole composition, because they are so varied in nature and effect, and because anyway the optimum amount is a matter of taste. It must be borne in mind that concentrated natural meat and/or vegetable flavours are liable to contribute to the protein and/or carbohydrate and/or oil contents of the composition, and thereby also to the calorie-value of the composition, but usually their taste is somewhat preferable.

Synthetic flavours have the advantage that they are usually calorie-free, and that the quantity needed is usually far less—but a more palatable product can usually be obtained using a mixture of synthetic and natural meat and/or vegetable flavours, which moreover tends also to be cheaper. A large range of other synthetic savoury flavours are available commercially, including chicken, beef, tomato and asparagus.

Natural meat flavours are usually best carried into the compositions by the use of natural meat protein or hydrolysates thereof in the basic protein ingredient. As regards concentrated vegetable flavours, it is possible to employ one or more of the numerous powders and chemicals available today. These include tomato powder, dehydrated onion, mushroom, etc., as well as many others, all of which are well-known. These are valuable since they give a specific recognisable type of flavour to the beverage. A large number of flavouring substances are available commercially from several well-known companies specialising in such products.

As to salt, this generally is desirable from a taste-standpoint, and when no other considerations debar its use it can be present according to taste, but not normally in a proportionate amount exceeding 75% of the weight of the whole composition.

Although generally undesirable from other viewpoints, from the standpoint of taste the flavouring component can also advantageously contain a small proportion of added oil and/or fat. However, the proportionate amount of oil and/or fat present should usually not exceed 20% by weight of the whole composition.

Whenever oil and/or fat is present it will most conveniently consist substantially of spray-dried vegetable fat and/or hydrogenated vegetable fat.

Especially when such oils and/or fats are present, but also when the dry proteinaceous material is largely of natural origin, the flavouring component of the composition may with advantage incorporate appropriate small amounts of emulsifying agents such as polyoxyethylene sorbitan mono-oleate, and it may also advantageously then incorporate anti-oxidants such as *alpha*-tocopherol and/or butyrated hydroxy toluene. The amounts in which such emulsifying agents and/or anti-oxidants need be present is however small, and normally they need not be taken into account when calculating the permissible limits of other necessary and optional ingredients in the composition.

Although colouring matter does not normally contribute to the taste of the beverage prepared from the composition, since people associate certain tastes with certain colours it is appropriate to include any necessary colouring matter in the flavour component. The colouring matter may be a dye and/or a pigment of whatever nature may be suitable in view of the intended taste, provided naturally that it is of an edible nature permitted by the local laws. The proportionate amount of colouring matter needed to achieve the desired colour is mostly very small, and no account need usually be taken of this when calculating the permissible limits of the other ingredients.

Dependent naturally upon the manner in which the compositions of this invention will ultimately be used, it may be very desirable to ensure that they contain some or all of the vitamins and/or minerals required by man in appropriate amounts. Further reference will be made below to the amounts of vitamins and/or minerals needed, but here it can briefly be said that the vitamins which can usefully be included are usually vitamins A, $B_1$, $B_2$, $B_6$, $B_{12}$, C, D, E, and nicotinic acid and folic acid—but the amounts required of these tend to be so small that no account need be taken of them when calculating the permissible limits of the other necessary and optional ingredients of the compositions of this invention.

If vitamins are incorporated, it will be obvious reasons be desirable to incorporate them in the appropriate relative proportions, which appear from the following table where the amounts specified are the generally-accepted required daily amounts (RDA) in man:—

| | |
|---|---|
| Vitamin A | 5000 I.U. |
| Vitamin $B_1$ | 1.2 mg |
| Vitamin $B_2$ | 1.5 mg |
| Vitamin $B_6$ | 2.0 mg |
| Vitamin $B_{12}$ | 0.006 mg |
| Nicotinamide | 18 mg |
| Vitamin C | 55 mg |
| Vitamin D | 400 I.U. |
| Vitamin E | 25 I.U. |
| Folic acid | 0.4 mg |

As regards minerals, the elements most likely to be needed in such a composition are iron and iodine, as well as possibly magnesium and calcium and perhaps traces of copper and zinc, all of which can readily be supplied in the form of their salts, for example as ferric phosphate, magnesium hydrogen phosphate, potassium iodide and cupric and zinc acetate or sulphate. Mineral salts however tend to bulk larger than vitamins, and if present in any substantial amount must be taken into account when calculating the permissible limits of other necessary and optional ingredients of the composition.

If minerals are incorporated, it will again be desirable to incorporate them in the appropriate relative proportions, which appear from the following table where the amounts specified are the generally-accepted required daily amounts (RDA) in man:—

| | |
|---|---|
| Iodine | 0.140 mg |
| Calcium | 800 mg |
| Phosphorus | 800 mg |
| Iron | 18 mg |
| Magnesium | 350 mg |

The amounts of one, some or all of the vitamins and minerals present in the compositions of this invention should be such that not less than one quarter and not more than twice the RDA of one or more is to be found in the datum amount of composition intended for consumption at a single mealtime, which will be further described and explained below.

All the ingredients, whether necessary or optional, of the compositions of this invention as described above play an active role of some kind in the compositions. As will be further described below, it is however envisaged that the compositions shall be presented to the intending user in such a way that it is easy for any such user to use the correct amount of composition needed to make the beverage correctly. Thus it is envisaged that the composition will be presented to the user either in the form of a tablet containing the datum amount of composition needed for one mealtime (whether the user be having one meal or three meals a day) or in the form of a powder wherein some convenient measure—say perhaps a heaped teaspoonful—will contain that dataum amount. To achieve that

6

## 0019675

purpose it may and often will be necessary to include some amount of a bulking component in the composition of this invention, in order that the necessary and any selected optional ingredients may thereby be bulked out to a conveniently-sized datum amount.

At this point, it is convenient to observe that while the datum amount of composition needed for one mealtime is a matter of personal choice, the chosen datum amount will nearly always be in the range of from 0.2 gram to 12 grams, which are the suitable limits for compressed tablets. In the case of tablets the datum amount chosen will indeed normally lie in the weight range of from 2 to 8 grams, and tablets of about 3 grams weight are preferred.

Any suitable water-soluble and/or water dispersible materials which are ingestible may be employed as the bulking component. Examples of bulking agents which may readily be used, separately or in various combinations, as the bulking component in the compositions of the invention include cellulose, methyl cellulose, pectin, or gums such as acacia gum, tragacanth gum, guar gum and xanthan gum. The bulking agent can sometimes serve a dual function—for instance where the composition is to be ultimately presented to the user in the form of tablets, part or even all of any bulking agent used can advantageously be chosen so that it serves also as a tabletting lubricant.

A recommended bulking-cum-lubricating agent of this kind is for instance magnesium carbonate. Provided that carbohydrates are not debarred by dietetic considerations the bulking agents used may also include carbohydrate-type materials such as starch.

The compositions of this invention may find use for preparing beverages enjoyable by the public at large, and thus in its broadest aspect the invention does not exclude the possibility of including therein substantial quantities of carbohydrate-, fat-, and/or protein-containing substances which will contribute a high calorie-content thereto. However, it is currently envisaged that the prime utility of the compositions of this invention will be to make more palatable or more endurable the dietary regimes of patients on a low-calorie diet.

Accordingly it is a sometimes preferred feature of this invention that the datum amount of compositions needed for one mealtime shall not contain more than 80 Kcals, and normally not more than 50 Kcals. In fact it is for most purposes possible and desirable to restrict the calorie content of the composition to not more than 25 K-calories per tablet, and as will be seen from the subsequent Examples very low-calorie tablet compositions which are quite palatable can be prepared containing less than 10 Kcals.

Similarly, should the compositions of this invention and the beverages made from them be intended for use in conjunction with a low-salt or salt-free dietary regime, it is then very desirable or even necessary to exclude salt from the composition, at least so far as possible. It is thus also an occasionally preferred feature of the invention that the datum amount of composition intended for use at a single mealtime should not contain more than 0.1 gram of salt, and preferably (dependent however upon any natural salt-content in any of the other ingredients) none. Certainly in such circumstances the flavouring component of the composition should provide no added salt whatever.

In order that the invention may be well understood some examples (in which the percentages, which are by weight, are expressed to 2 places of decimals only) will now be given, in order to show certain preferred compositions, though merely by way of illustration, as follows:—

Example 1
Tomato-flavoured tablets
The following dry ingredients were placed in the mixing bowl (in any order, not necessarily the order given below which is adopted merely for convenience in indicating their relative and absolute proportions) of a conventional mixer:—

7

## 0 019 675

|  | Amount | % of whole composition |
|---|---|---|
| **Basic protein** | | |
| Hydrolysed soyabean protein | 150 grams | 15.00% |
| **Gas-former mix** | | |
| Sodium bicarbonate | 63 grams | 6.30% |
| Malic acid | 75 grams | 7.50% |
| [Anti-caking agent] | [NIL] | — |
| **Flavour-enhancer** | | |
| Mono-sodium glutamate | 37 grams | 3.70% |
| **Flavouring-component** | | |
| Dehydrated tomato powder | 306.4 grams ⎫ | 30.64% ⎫ |
| Synthetic tomato flavour | 90 grams ⎪ | 9.00% ⎪ |
| Onion flavour | 75 grams ⎬ 663 grams | 7.50% ⎬ 66.30% |
| Salt | 190 grams ⎪ | 19.00% ⎪ |
| Pepper | 1.5 grams ⎪ | 0.15% ⎪ |
| Colouring | 0.1 gram ⎭ | 0.01% ⎭ |
| **Bulking &c. component** | | |
| Magnesium carbonate | 12 grams | 1.20% |
| | 1000 grams | 100.00% |

All these ingredients were intimately mixed, and then formed by compression in conventional tabletting machinery into tablets each weighing 3 grams. These tablets had a calorie content of about 8 Kcals/tablet each.

One of these tablets dissolved or dispersed in 125 ml of hot water gives a highly-palatable tomato-flavoured beverage.

Example 2
Tomato-flavoured tablets
Following the same procedure as in Example 1, but replacing 150 grams of hydrolysed soyabean protein by the same amount of dehydrated beef, yields tablets with the same calorie content, which can be dissolved and dispersed in the same amount of hot water to give an essentially similar tomato-flavoured beverage.

Example 3
Chicken-flavoured tablets
In essentially the same manner as in Example 1 the following dry ingredients were mixed together.

|  | Amount | | % of whole composition |
|---|---|---|---|
| **Basic protein** | | | |
| Dehydrated chicken meat | 100 | grams | 21.62% |
| **Gas-former mix** | | | |
| Citric acid | 12 | grams | 2.59% |
| Sodium bicarbonate | 12 | grams | 2.59% |
| **Anti-caking agent** | [NIL] | | — |
| **Flavour-enhancer** | | | |
| Mono-sodium glutamate | 82.5 | grams | 17.84% |
| **Flavouring component** | | | |
| Salt | 246 | grams | 53.20% |
| Mixed spices | 10 | grams | 2.16% |
| | 462.50 grams | | 99.98% |

After all these ingredients had been intimately mixed together, the mixture was then compressed, in conventional tabletting machinery, to form tablets each weighing 2.5 grams. These tablets each had a calorie content of about 6 Kcals.

One of these tablets dropped into 100 ml of hot water dissolved and/or dispersed quite quickly to yield a highly palatable chicken-flavour beverage.

Example 4

Chicken-flavoured tablets

Using essentially the same techniques as in Examples 1—3, the following dry ingredients were mixed together:—

|  | Amount | % of whole composition |
|---|---|---|
| Basic protein | | |
| Dehydrated chicken meat | 120 grams | 24.59% |
| Gas-former | | |
| Ammonium carbonate | 24 grams | 4.92% |
| Anti-caking agent | | |
| [NIL] | — | — |
| Flavour-enhancer | | |
| Mono-sodium glutamate | 80 grams | 16.39% |
| Flavouring components | | |
| Salt | 244 grams | 50.00% |
| Mixed spices | 10 grams | 2.05% |
| Bulking &c. component | | |
| Magnesium carbonate | 10 grams | 2.05% |
| | 488 grams | 100.00% |

After all these ingredients had been intimately mixed together, the mixture was then compressed using conventional tabletting machinery into tablets each weighing 3 grams. These tablets each had a calorie-content of about 7 Kcals.

When a tablet was dropped into 100 ml of hot water it rapidly disintegrated (without any noticeable effervescence) and dissolved and/or dispersed to give a high-palatable chicken-flavour beverage.

**0 019 675**

Example 5
Asparagus-flavoured tablets (enriched with vitamins and minerals)—RDA
Using the same technique as in Example 1, the following dry ingredients were mixed together:—

|  | | Amount in composition | % of whole composition |
|---|---|---|---|
| Basic protein | | | |
| Hydrolysed soyabean protein | | 7 grams | 2.77% |
| Milk powder (ca. 30% protein) | | 27.35 grams | 10.83% |
| Gas-former mix | | | |
| Sodium bicarbonate | | 12 grams | 4.75% |
| Malic acid | | 12 grams | 4.75% |
| Anti-caking agent | | | |
| Bone phosphate (80% tricalcium phosphate) | | 70.5 grams | 27.92% |
| Flavour-enhancer | | | |
| Mono-sodium glutamate | | 7 grams | 2.77% |
| Flavour &c. components | | | |
| Asparagus flavour | 2.5 grams | | |
| Salt | 30 grams | | |
| Pepper | 0.75 gram | 36.625 grams | 14.50% |
| Spices | 0.375 gram | | |
| Colouring | 3 grams | | |
| Bulking component | | | |
| [NIL] | | | |
| Vitamins mix | | | |
| Vitamin A | 150,000 I.U. | | |
| Vitamin $B_1$ | 36 mg | | |
| Vitamin $B_2$ | 45 mg | | |
| Vitamin $B_6$ | 60 mg | | |
| Vitamin $B_{12}$ | 0.18 mg | | |
| Nicotinamide | 540 mg | 2.5 grams | 0.99% |
| Vitamin C | 1650 mg | | |
| Vitamin D | 12,000 I.U. | | |
| Vitamin E | 750 I.U. | | |
| Folic acid | 12 mg | | |
| Minerals mix | | | |
| Ferric phosphate | | 1.5 grams | 0.59% |
| Magnesium hydrogen phosphate ($MgHPO_4 \cdot 3H_2O$) | | 76 grams | 30.09% |
| Potassium iodide | | 5.4 mg | 0.00% |
| Traces of cupric and zinc acetate | | — | — |
| | | 252.50 grams | 99.96% |

After all these ingredients had been intimately mixed together, the mixture was then compressed in conventional tabletting machinery to form tablets each weighing 8.5 grams. These tablets each had a calorie content of 5 Kcals, and contained the required daily amounts (RDA) of all the essential vitamins and the more important minerals needed by man.

Added to 125 ml of hot water, one such tablet yielded a palatable, asparagus-flavoured beverage.

10

# 0 019 675

Example 6
Asparagus flavoured tablets (enriched with vitamins and minerals—1/3rd RDA)

|  | | Amount in composition | | % of whole composition |
|---|---|---|---|---|
| Basic protein | | | | |
|    Hydrolysed soyabean protein | | 7 | grams | 4.79% |
|    Milk powder (*ca* 30% protein) | | 27.35 | grams | 18.73% |
| Gas-former | | | | |
|    Sodium bicarbonate | | 6 | grams | 4.11% |
|    Malic acid | | 6 | grams | 4.11% |
| Anti-caking agent | | | | |
|    Bone phosphate (80% tricalcium phosphate) | | 25 | grams | 17.12% |
| Flavour-enhancer | | | | |
|    Mono-sodium glutamate | | 7 | grams | 4.79% |
| Flavour component | | | | |
|    Asparagus flavour | 2.5 grams ⎫ | | | |
|    Salt | 30 grams ⎪ | | | |
|    Pepper | 0.75 gram ⎬ | 36.625 | grams | 25.08% |
|    Spices | 0.375 gram ⎪ | | | |
|    Colour | 3 grams ⎭ | | | |
| Bulking component | | | | |
|    Starch | | 4.5 | grams | 3.08% |
| Vitamins mix | | | | |
|    Vitamin A | 50,000 I.U. ⎫ | | | |
|    Vitamin B | 12 mg ⎪ | | | |
|    Vitamin $B_2$ | 15 mg ⎪ | | | |
|    Vitamin $B_6$ | 20 mg ⎪ | | | |
|    Vitamin $B_{12}$ | 0.06 mg ⎬ | | | |
|    Nicotinamide | 180 mg | 0.78 | grams | 0.53% |
|    Vitamin C | 550 mg ⎪ | | | |
|    Vitamin D | 4,000 I.U. ⎪ | | | |
|    Vitamin E | 250 I.U. ⎪ | | | |
|    Folic acid | 4 mg ⎭ | | | |
| Minerals mix | | | | |
|    Ferric phosphate | | 0.5 | grams | 0.34% |
|    Magnesium hydrogen phosphate ($MgHPO_4 \cdot 3H_2O$) | | 25 | grams | 17.12% |
|    Potassium iodide | | 1.8 | mg | 0.00% |
| | | *ca* 146 | grams | 99.8% |

After all these ingredients had been intimately mixed together, the mixture was compressed using conventional tabletting machinery to form tablets each weighing 4.85 grams. Each tablet has a calorie-content of about 5 Kcals. The vitamins and the minerals in each tablet will supply about one-third of the required daily amounts (RDA) in man, and thus three tablets per day will ensure that these RDA needs are fully met.

These tablets disintegrate readily in hot water, and when thus dissolved and/or dispersed in 125 ml of hot water one such tablet provides a palatable, asparagus-flavoured beverage.

## 0 019 675

Example 7

Asparagus-flavoured powder

Using the same mixing technique as in Example 1, the following dry ingredients were mixed together:—

| | | Amount in composition | | % of whole composition |
|---|---|---|---|---|
| Basic protein | | | | |
| Hydrolysed soyabean protein | | 7 | grams | 4.49% |
| Milk powder (ca 30% protein) | | 27.35 | grams | 17.56% |
| Gas-former mix | | | | |
| Sodium bicarbonate | | 6 | grams | 3.85% |
| Malic acid | | 6 | grams | 3.85% |
| Anti-caking agent | | | | |
| Bone phosphate (80% tricalcium phosphate) | | 25 | grams | 16.05% |
| Flavour-enhancer | | | | |
| Mono-sodium glutamate | | 7 | grams | 4.49% |
| Flavour &c. components | | | | |
| Spray-dried vegetable fat (+traces of tocopherol and soya lecithin) | 10 grams | | | |
| Salt | 30 grams | | | |
| Pepper | 0.75 gram | 46.625 grams | | 29.94% |
| Spices | 0.375 gram | | | |
| Colouring | 3 grams | | | |
| Asparagus flavour | 2.5 grams | | | |
| Vitamins mix (as in Example 6) | | 0.78 | grams | 0.50% |
| Minerals mix (as in Example 6) | | 25.5 | grams | 16.37% |
| Bulking component | | | | |
| Starch | | 4.5 | grams | 2.89% |
| | | 155.75 | grams | 99.99% |

These ingredients were intimately mixed forming a dry, non-caking powder which was packed into screw-topped glass jars. A teaspoonful of this powder assumed to contain 5 grams, had a calorie-content of about 10 Kcals, and dissolved very readily in 125 ml of hot water to provide an asparagus-flavoured beverage which proved very palatable, and contained about one-third of the RDA of vitamins and minerals in man.

### Claims

1. Dry compositions in powder or tablet form, for dissolution in aqueous ingestible liquids to yield beverages with a savoury flavour, which comprise dry proteinaceous material optionally combined with non-proteinaceous adjuvants, characterized in that the composition contains dry proteinaceous material present in an amount of from 5% to 90% of the total weight of the composition and a gas-former present in an amount, proportionate to the other ingredient(s), which is sub-effervescent but sufficient to facilitate disintegration, dispersion and dissolution of the proteinaceous material in aqueous ingestible liquid to form the desired beverage.

2. A dry composition as claimed in claim 1, characterized in that each 100 grams of composition contains an amount of gas-former in the range of from 66 milliequivalents to 833 milliequivalents of gas-former.

3. A dry composition as claimed in claim 1 or claim 2, characterized in that the gas-former is or includes one which generates carbon dioxide, preferably an effervescent couple comprising a mixture of a carbonate and/or bicarbonate with an acid, or one which generates ammonia, preferably ammonium carbonate or bicarbonate.

4. A dry composition as claimed in claim 1 or claim 2, characterized in that the gas-former is or

12

includes an effervescent couple comprising a dry mixture of a carbonate and/or a bicarbonate with an acid, in which the proportionate amount of gas-former is from 5% to 40% by weight of the whole composition.

5. A dry composition as claimed in claim 1 or claim 2, characterized in that the gas-former is or includes a bicarbonate/acid mix and/or ammonium carbonate/bicarbonate and that the proportionate amount of gas-former present in the composition is in the range of from 5% to 30% by weight, and preferably in the range of from 5% to 15% by weight.

6. Dry compositions as claimed in any of the preceding claims, characterized in that they also contains as an anti-caking agent tricalcium phosphate in an amount relative to the whole composition of not more than 75% by weight, and preferably from 5% to 15% by weight.

7. Dry composition as claimed in any of the preceding claims, characterized in that they also contain a ribotide or mono-sodium glutamate as a flavour-enhancer.

8. Dry compositions as claimed in any of the preceding claims, characterized in that they also contain as a flavouring component concentrated natural meat flavours, concentrated natural vegetable flavours, synthetic meat flavours, synthetic vegetable flavours, salt or pepper or other spices in an amount of up to 75% by weight of the whole composition.

9. Dry compositions as claimed in any of the preceding claims, characterized in that they also contain some or all of the vitamins and/or minerals required by man.

10. A dry composition as claimed in claim 9, characterized in that the amounts of vitamins and/or minerals present in the datum amount of composition intended for consumption at a single mealtime is not less than one-quarter and not more than twice the required daily amounts thereof, and the composition also includes a bulking component in order to bulk out the other ingredients to a conveniently-sized datum amount of composition intended for one mealtime in the range of from 0.2 gram to 12 grams, preferably in the weight range of from 2 to 8 grams.

11. A dry composition as claimed in claim 10, characterized in that the datum amount of composition contains not more than 80 Kcals, generally not more than 25 Kcals, and preferably not more than 10 Kcals.

## Patentansprüche

1. Proteinhaltige Materialien und gegebenenfalls Hilfsstoffe, die keine Proteine sind, enthaltende Trockenzusammensetzungen in Pulver- oder Tablettenform für die Lösung in wäßrigen einnehmbaren Flüssigkeiten zur Herstellung wohlschmeckender Getränke, dadurch gekennzeichnet, daß sie trockenes proteinhaltiges Material in einer Menge von 5% bis 90% des Gesamtgewichts der Zusammensetzung sowie in entsprechender Menge zu dem (n) anderen Bestandteil (en) ein Gas erzeugendes Mittel enthalten, die nicht zum Schäumen führt, aber ausreicht, um unter Bildung des gewünschten Getränkes den Zerfall, die Dispergierung und die Lösung des proteinhaltigen Materials in der wäßrigen einnehmbaren Flüssigkeit zu fördern.

2. Trockenzusammensetzung nach Anspruch 1, dadurch gekennzeichnet, daß sie jet 100 g der Zusammensetzung 66 bis 833 Milliäquivalente des Gas erzeugenden Mittels enthält.

3. Trockenzusammensetzung nach Anspruch 1 oder 2, dadurch gekennzeichnet, daß das Gas erzeugende Mittel ein Kohlendioxid erzeugendes Mittel ist oder ein solches enthält, vorzugsweise eine schäumende Kombination aus einer Mischung eines Carbonats und/oder eines Bicarbonats mit einer Säure, oder ein Ammoniak erzeugendes Mittel, vorzugsweise Ammoniumcarbonat oder -bicarbonat.

4. Trockenzusammensetzung nach Anspruch 1 oder 2, dadurch gekennzeichnet, daß das Gas erzeugende Mittel aus einer schäumenden Kombination eines trockenen Gemisches aus Carbonat und/oder Bicarbonat und einer Säure besteht oder eine solche enthält, wobei die Menge des Gas erzeugenden Mittels 5 bis 40 Gew.% der gesamten Zusammensetzung ausmacht.

5. Trockenzusammensetzung nach Anspruch 1 oder 2, dadurch gekennzeichnet, daß das Gas erzeugende Mittel aus einer Bicarbonat/Säure Mischung und/oder Ammoniumcarbonat/-bicarbonat besteht oder diese Mischungen enthält und die Menge des Gas erzeugenden Mittels in der Zusammensetzung 5 bis 30 Gew.%, vorzugsweise 5 bis 15 Gew.% ausmacht.

6. Trockenzusammensetzungen nach einem der vorhergehenden Ansprüche, dadurch gekennzeichnet, daß sie außerdem als ein einem Verbacken entgegenwirkendes Mittel Tricalciumphosphat in einer Menge von nicht mehr als 75 Gew.% und vorzugsweise von 5 bis 15 Gew.% der gesamten Zusammensetzung enthalten.

7. Trockenzusammensetzungen nach einem der vorhergehenden Ansprüche dadurch gekennzeichnet, daß sie außerdem ein Ribotid oder Mononatriumglutamat als den Geschmack verbesserndes Mittel enthalten.

8. Trockenzusammensetzungen nach einem der vorhergehenden Ansprüche, dadurch gekennzeichnet, daß sie als den Geschmack verbesserndes Mittel konzentrierte natürliche Fleischgeschmacksstoffe, konzentrierte natürliche Gemüsegeschmacksstoffe, synthetische Fleischgeschmacksstoffe, synthetische Gemüsegeschmacksstoffe, Salz oder Pfeffer oder andere Gewürze in einer Menge von bis zu 75 Gew.% der gesamten Zusammensetzung enthalten.

9. Trockenzusammensetzungen nach einem der vorhergehenden Ansprüche, dadurch gekennzeichnet, daß sie außerdem einige oder alle der vom Menschen benötigten Vitamine und/oder Mineralstoffe enthalten.

10. Trockenzusammensetzung nach Anspruch 9, dadurch gekennzeichnet, daß die Menge der Vitamine und/oder Mineralstoffe, die in der für den Verbrauch in einer einzigen Mahlzeit bestimmten Menge der Zusammensetzung enthalten sind, nicht unter einem 1/4 und nicht über dem zweifachen der täglich benötigten Menge liegt, und die Zusammensetzung ferner ein Streckmittel enthält, damit die anderen Bestandteile in Form einer für eine Mahlzeit bequem abmessbaren bestimmten Menge von 0,2 g bis 12 g, vorzugsweise von 2 bis 8 g vorliegen.

11. Trockenzusammensetzung nach Anspruch 10, dadurch gekennzeichnet, daß die bestimmte Menge der Zusammensetzung nicht mehr als 335 kj (80 kcal), im allgemeinen nicht mehr als 105 kj (25 kcal) und vorzugsweise nicht mehr als 42 kj (10 kcal) enthält.

**Revendications**

1. Compositions sèches sous forme de poudres ou de comprimés, destinées à être dissoutes dans des liquides aqueux ingérables pour engendrer des boissons d'un arôme savoureux, qui comprennent une matière protéinique éventuellement combinée à des adjuvants non protéiniques, caractérisées en ce qu'elles contiennent de la matière protéinique sèche, présente en une proportion variant de 5% à 90% du poids total des compositions et un agent de formation de gaz présent en une quantité, proportionnelle aux autres ingrédients, qui est sub-effervescente mais suffisante pour faciliter la désintégration, la dispersion et la dissolution de la matière protéinique dans le liquide aqueux ingérable, de manière à former la boisson souhaitée.

2. Composition sèche suivant la revendication 1, caractérisée en ce que chaque 100 grammes de la composition contiennent une quantité d'agent formateur de gaz qui fluctue de 66 milliéquivants à 833 milliéquivalents d'agent formateur de gaz.

3. Composition sèche suivant la revendication 1 ou la revendication 2, caractérisée en ce que l'agent formateur de gaz est ou comprend une substance qui engendre de l'anhydride carbonique, de préférence, un couple effervescent qui comprend un mélange d'un carbonate et/ou d'un bicarbonate et d'un acide, ou comprend une substance qui engendre de l'ammoniac, de préférence, du carbonate ou bicarbonate d'ammonium.

4. Composition sèche suivant la revendication 1 ou la revendication 2, caractérisée en ce que l'agent formateur de gaz est ou comprend un couple effervescent comprenant un mélange sec d'un carbonate et/ou d'un bicarbonate et d'un acide, où la quantité proportionnelle de l'agent formateur de gaz varie de 5% à 40% en poids par rapport à la composition totale.

5. Composition sèche suivant la revendication 1 ou la revendication 2, caractérisée en ce que l'agent formateur de gaz est ou comprend un mélange bicarbonate/acide et/ou du carbonate/bicarbonate d'ammonium et en ce que la quantité proportionnelle d'agent formateur de gaz présente dans la composition fluctue de 5% à 30% en poids et, de préférence, de 5% à 15% en poids.

6. Compositions sèches suivant n'importe laquelle des revendications précédentes, caractérisées en ce qu'elles contiennent également, à titre d'agent antiagglutination, du phosphate tricalcique, en une proportion par rapport à la composition totale non supérieure à 75% en poids et, de préférence, de 5% à 15% en poids.

7. Compositions sèches suivant n'importe laquelle des revendications précédentes, caractérisées en ce qu'elles contiennent également un ribotide ou du glutamate monosodique à titre d'agent d'élévation de la saveur.

8. Compositions sèches suivant n'importe laquelle des revendications précédentes, caractérisées en ce qu'elles contiennent également, à titre d'agent aromatisant, des arômes de viande naturels concentrés, des arômes végétaux naturels concentrés, des arômes de viande synthétiques, des arômes végétaux synthétiques, du sel, du poivre ou d'autres épices, en une proportion allant jusqu'à 75% en poids de la composition totale.

9. Compositions sèches suivant n'importe laquelle des revendications précédentes, caractérisées en ce qu'elles contiennent également certaines ou toutes les vitamines et/ou matières minérales exigées par l'homme.

10. Composition sèche suivant la revendication 9, caractérisée en ce que la quantité de vitamines et/ou de matières minérales présentes dans la quantité de base se composition destinée à la consommation en un seul repas, n'est pas inférieure au quart et ne dépasse pas le double des quantités quotidiennes nécessaires de ces substances et la composition comprend également un constituant conférant de la masse pour amener la masse des autres ingrédients jusqu'à une quantité de base convenablement dimentionnée de la composition destinée à un seul repas, qui varie de 0,2 gramme à 12 grammes, de préférence, dans la gamme pondérale de 2 à 8 grammes.

11. Composition sèche suivant la revendication 10, caractérisée en ce que la quantité de base de composition ne contient pas plus de 80 Kcals, généralement pas plus de 25 Kcals et, de préférence, pas plus de 10 Kcals.